# DEMANDE DE BREVET EUROPEEN

(11) **EP 0 596 578 A1**
(43) Date de publication de la demande: **11.05.1994**
(21) Numéro de dépôt: 93203084.4
(22) Date de dépôt: 03.11.1993
(51) Int. Cl.: F16L 11/16

(54) **Tuyau flexible agrafé et onduleux**

(30) Priorité: 03.11.1992 FR 9213445
(71) Demandeur: TUBEST, F-02130 Fere en Tardenois (FR)
(72) Inventeur: LE FOLL, Marcel, F-02200 PASLY (FR)
(74) Mandataire: Bratel, Gérard

(57) **Abrégé**

Ce tuyau flexible agrafé et onduleux est du type réalisé à partir d'un feuillard (2) enroulé hélicoïdalement avec le bord de chacune de ses spires conformé pour pouvoir être agrafé au bord de la spire voisine.

D'une part, l'agrafe (3) n'est pas totalement sertie en vue de permettre, moyennant un certain frottement, un déplacement axial entre spires et, d'autre part, le feuillard (2) utilisé est onduleux, c'est-à-dire qu'il a été préalablement conformé avec des ondulations (4).

## Description

La présente invention concerne un tuyau flexible agrafé et onduleux.

Les tuyaux flexibles utilisés actuellement (tuyaux métalliques) appartiennent à deux grands groupes : les "tuyaux onduleux" réalisés à partir d'un tube en acier mince, auquel on imprime des déformations radiales annulaires ou hélicoïdales, et les "tuyaux agrafés", réalisés à partir d'une bande de feuillard conformée et enroulée en spirale. Les tuyaux flexibles agrafés appartiennent eux-mêmes à deux grands groupes : le groupe des tuyaux agrafés à agrafe libre et le groupe des tuyaux agrafés à agrafe sertie ou bloquée, pour lesquels la flexibilité est donnée par la présence d'ondulations dans le feuillard.

Les tuyaux onduleux ont l'avantage d'être parfaitement étanches mais l'inconvénient d'être peu flexibles, de ne pas accepter les mouvements de torsion et de n'amortir que faiblement les vibrations qui les parcourent axialement. En outre, ils freinent souvent les fluides en circulation.

Les tuyaux agrafés à agrafage libre ont l'avantage de présenter une bonne flexibilité et d'accepter les mouvements de torsion mais, par contre, ils ont l'inconvénient d'être peu étanches et, aussi, non seulement de ne pas assez amortir les vibrations mais, au contraire, d'en amplifier les effets nuisibles en étant, eux-mêmes, le siège de vibrations bruyantes.

Les tuyaux agrafés à agrafe sertie ou bloquée présentent sensiblement les mêmes propriétés d'étanchéité que les tuyaux onduleux. Cependant, ils sont rigides et pour les rendre flexibles, il est nécessaire d'utiliser un feuillard onduleux.

La présente invention vise à remédier à tous les inconvénients des tuyaux flexibles connus tout en rassemblant tous leurs avantages respectifs.

A cet effet, elle concerne un tuyau flexible du type réalisé à partir d'un feuillard enroulé hélicoïdalement avec le bord de chaque spire conformé pour pouvoir être agrafé au bord de la spire voisine, dans lequel, d'une part, l'agrafe n'est pas totalement sertie en vue de permettre, moyennant une certain frottement, un déplacement axial entre spires et, d'autre part, le feuillard utilisé est onduleux, c'est-à-dire qu'il a été préalablement conformé avec des ondulations.

Ce tuyau est donc plus flexible qu'un tuyau agrafé à agrafage libre puisque sa flexibilité est accrue par la présence des ondulations du feuillard ; il admet autant que lui les mouvements de torsion et il présente, sur lui, l'avantage d'amortir, par frottements, les vibrations et de pouvoir être rendu presque totalement étanche, si nécessaire.

En effet, dans ce tuyau, il est possible de prévoir un prolongement latéral interne de l'un des deux bords du feuillard apte à recouvrir, intérieurement, au moins, les ondulations de la spire adjacente. Il est encore possible de prévoir que ce prolongement latéral recouvre aussi l'agrafe du bord opposé de la spire adjacente.

Avec de tels recouvrements, connus en soi, il est donc tout à fait possible d'améliorer les propriétés d'étanchéité de ce tuyau agrafé à agrafe non totalement sertie par la création, par ce prolongement latéral interne d'un bord du feuillard, d'un nombre croissant de chambres de détentes pour les fuites tout en diminuant les pertes de charge dans le tuyau.

Naturellement, il est possible que le prolongement latéral interne de l'un des bords du feuillard appartienne audit feuillard ou à un feuillard supplémentaire rapporté et agrafé simultanément au feuillard principal.

Enfin, il est possible d'améliorer encore l'étanchéité de ce tuyau en insérant, dans l'agrafe, un joint d'étanchéité en une matière susceptible de supporter les conditions d'utilisation de ce tuyau. Si ce dernier doit être soumis à des températures élevées, comme cela est le cas des tubulures d'échappement des véhicules automobiles, ce joint est avantageusement en cuivre, amiante ou fibres minérales.

Dans le cas où des températures élevées ne sont jamais atteintes, il peut être réalisé en n'importe quelle matière adaptée telles que les fibres organiques comme le coton, les aramides ou des polymères comme du caoutchouc, du polytétraf luoréthylène ou autre. Ce joint peut aussi être auto-lubrifiant ou imprégné d'un lubrifiant, pour améliorer les caractéristiques de souplesse et d'étanchéité du tuyau, et si l'amortissement des vibrations n'est pas primordial.

De toute façon, l'invention sera bien comprise, à l'aide de la description qui suit, en référence au dessin schématique annexé représentant, à titres d'exemples non limitatifs, plusieurs formes d'exécution de ce tuyau :
Figure 1 est une vue en demi-coupe axiale d'une première forme d'exécution de ce tuyau flexible ;
Figures 2 et 3 sont des vues similaires à figure 1 montrant deux variantes d'exécution de ce tuyau ;
Figure 4 est, à échelle agrandie, une vue partielle en demi-coupe axiale d'une forme d'exécution perfectionnée du tuyau de figure 1.

Comme le montre le dessin, le tuyau selon l'invention est du type agrafé et onduleux, c'est-à-dire qu'il est réalisé à l'aide d'un feuillard 2 destiné à être enroulé hélicoïdalement autour d'un axe 1 avec liaison des bords latéraux de chacune de ses spires par un agrafage réalisant une agrafe 3. Comme le montre le dessin, le feuillard 2 est pourvu, dans sa partie médiane, d'ondulations 4 en saillie sur sa face externe et qui, dans tous les exemples illustrés par le dessin, sont au nombre de deux.

Selon l'invention, l'agrafe 3 qui est réalisée pour la liaison de chaque spire du feuillard 2 avec les spires adjacentes qui l'entourent est non totalement sertie.

Cette disposition a pour effet de rendre possible un déplacement axial relatif de deux spires voisines avec un amortissement effectif de ces déplacements en raison des forces de frottement engendrées dans l'agrafe du fait qu'elle n'est ni totalement libre ni totalement sertie. La présence des ondulations 4 du feuillard 2 entre ses bords agrafés a pour effet de compenser la diminution de la flexibilité du tuyau due au sertissage partiel de son agrafe, les ondulations 4 ayant pour effet d'introduire, par elles-mêmes, une certaine flexibilité.

Le tuyau ainsi obtenu présente donc l'avantage d'une flexibilité accrue par rapport à la flexibilité des tuyaux flexibles préalablement connus, quel qu'en soit le type, et d'améliorer considérablement l'amortissement des vibrations axiales par suite des frottements engendrés, au niveau de l'agrafe 3, par ces vibrations.

Enfin, comme cela est le cas avec les tuyaux à agrafage libre, le tuyau de l'invention accepte les mouvements de torsion.

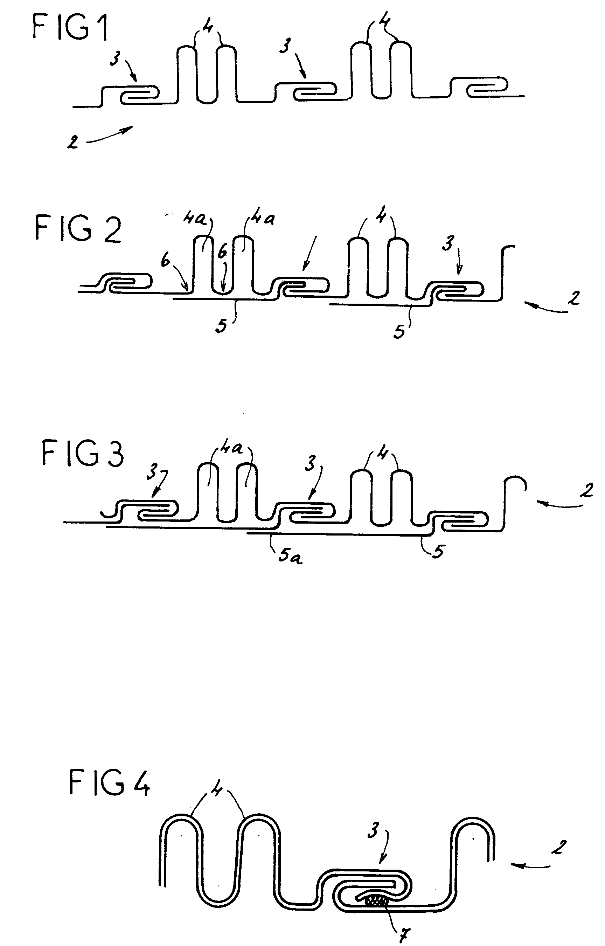

Dans sa forme d'exécution illustrée par la figure 1, le tuyau de l'invention peut être considéré comme présentant une étanchéité inférieure à celle que présente les tuyaux flexibles à agrafage bloqué connus antérieurement. Cependant, si besoin est, l'étanchéité de ce tuyau peut être améliorée en prévoyant, le long de l'un des bords latéraux du feuillard 2, et, de préférence, celui situé à l'opposé de l'agrafe 3 par rapport aux ondulations 4, d'un prolongement latéral interne 5 apte à recouvrir au moins la face interne de la zone de la spire adjacente comportant les ondulations 4, comme cela est illustré par la figure 2.

La présence de ce prolongement latéral interne 5 présente aussi l'avantage supplémentaire de diminuer les pertes de charge à l'intérieur de ce tuyau en recouvrant ses évidements intérieurs 4a constitués par les ondulations 4.

La présence de ce prolongement latéral interne 5 a aussi pour effet de diminuer les fuites et, par conséquent, d'améliorer l'étanchéité de ce tuyau par la création de deux chambres de détente délimitées par des restrictions annulaires 6.

L'exemple illustré par la figure 3 diffère de celui de la figure 2 par le fait que le prolongement latéral interne 5a du feuillard 5 s'étend de manière à recouvrir non seulement les ondulations 4 de la spire voisine, mais également l'agrafe 3 de cette dernière avec la spire située au-delà. Cette disposition présente les mêmes avantages que ceux de celle illustrée par la figure 2 mais elle apporte, comme avantage supplémentaire, celui d'éviter, par exemple, les phénomènes d'oxydation au niveau de l'agrafe ou la formation de dépôt qui risquerait de diminuer la possibilité offerte, de déplacement axial, par suite de son sertissage non totalement réalisé.

Dans l'exemple illustré sur la figure 3, le prolongement latéral interne 5a est obtenu par la présence d'un feuillard supplémentaire indépendant du feuillard principal 2 avec lequel il est agrafé simultanément lors de la réalisation de l'agrafe 3.

Naturellement, ce rebord latéral interne 5a pourrait, tout aussi bien, comme dans l'exemple de la figure 2, être solidaire, dès sa réalisation, du bord latéral du feuillard 2.

La figure 4 illustre une variante de réalisation de la forme d'exécution de ce tuyau flexible illustrée par la figure 1. Cependant, comme cela ressort de la description qui suit, cette variante pourrait tout aussi bien être appliquée aux deux formes d'exécution illustrées par les figures respectivement 2 et 3.

Dans cette variante, pour améliorer les qualités d'étanchéité de ce tuyau, un joint d'étanchéité 7 est inséré dans l'agrafe 3.

Ce joint d'étanchéité 7 peut être réalisé en n'importe quelle matière appropriée.

Cependant, dans le cas où le tuyau doit être soumis à des températures très élevées, comme cela est le cas lorsqu'il est utilisé pour constituer une partie de tubulure d'échappement d'un véhicule automobile, ce joint d'étanchéité 7 est réalisé en un matériau susceptible de supporter, sans risque de détérioration, de telles températures. Dans ce cas, il est avantageusement réalisé en cuivre, en amiante, ou en fibres minérales ou tout autre matériau susceptible de convenir aux conditions de température et de corrosion.

Pour des applications dans lesquelles le tuyau n'est soumis qu'à des températures relativement basses, il est possible d'utiliser des fibres organiques comme, par exemple, des fibres de coton, des fibres aramides, et mêmes des polymères comme du caoutchouc, du polytétrafluoréthylène et autre similaire.

Enfin, dans certaines applications, ce joint d 'étancheité 7 peut être auto-lubrifiant ou imprégné ou enduit d'un lubrifiant, de façon à améliorer les performances de l'agrafe 3 en souplesse et étanchéité.

Il a été indiqué, précédemment, que ce tuyau flexible convenait particulièrement bien à la réalisation de tubulures d'échappement de véhicules automobiles et, plus particulièrement, comme élément de découplement d'une ligne d'échappement. On sait que les différents organes de ces lignes d'échappement sont soumis à des vibrations qui leur sont propres et, de ce fait, les propriétés de flexibilité et d'amortissement de ce tuyau flexible sont particulièrement utiles dans cette application.

Par ailleurs, lorsque ses conditions d'utilisation le justifient, ce tuyau flexible peut être utilisé en association avec une tresse tubulaire. Cette tresse peut être placée à l'intérieur du tuyau flexible pour améliorer le guidage du fluide transporteur en diminuant les pertes de charge.

Cette tresse peut, aussi, être placée à l'extérieur du tuyau flexible. Dans ce cas, non seulement elle améliore les propriétés d'amortissement du tuyau en modifiant sa fréquence de résonnance mais, en outre, elle limite sa course axiale en extension.

## Revendications

1. Tuyau flexible agrafé et onduleux du type à agrafe (3) non sertie, c'est-à-dire réalisé à partir d'un feuillard enroulé hélicoïdalement avec le bord de chacune de ses spires conformé pour pouvoir être agrafé au bord de la spire voisine **caractérisé en ce que,** d'une part, l'agrafe (3) n'est pas totalement sertie en vue de permettre, moyennant un certain frottement, un déplacement axial entre spires et, d'autre part, le feuillard (2) utilisé est onduleux, c'est-à-dire qu'il a été préalablement conformé avec des ondulations (4).

2. Tuyau flexible selon la revendication 1, **caractérisé en ce que** l'un des deux bords du feuillard (2) enroulé hélicoïdalement et, de préférence, celui situé à l'opposé des ondulations (4) par rapport à l'agrafe (3), est muni d'un prolongement latéral interne (5, 5a) apte à recouvrir, intérieurement, au moins les ondulations (4) de la spire adjacente.

3. Tuyau flexible selon la revendication 2, **caractérisé en ce que** le prolongement latéral interne (5a) de l'un des bords du feuillard (2) enroulé hélicoïdalement et, de préférence, celui de ses bords situé à l'opposé des ondulations (4) par rapport à l'agrafe (3), est dimensionné de manière à recouvrir aussi l'agrafe (3) du bord opposé de la spire adjacente.

4. Tuyau flexible selon la revendication 3, **caractérisé en ce que** le prolongement latéral interne (5, 5a) de l'un des bords latéraux du feuillard (2) destiné à recouvrir intérieurement au moins les ondulations (4) de la spire adjacente et, éventuellement, l'agrafe (3) du bord opposé de cette spire adjacente, appartient au feuillard (2).

5. Tuyau flexible selon la revendication 3, **caractérisé en ce que** le bord latéral interne (5, 5a) du feuillard (2) destiné à recouvrir intérieurement au moins les ondulations (4) de la spire adjacente et, éventuellement, l'agrafe (3) du bord opposé de cette spire adjacente, est issu d'un feuillard indépendant agrafé au bord du feuillard principal (2) lors de la réalisation de l'agrafe (3).

6. Tuyau flexible selon l'une quelconque des revendications 1 à 5, **caractérisé en ce qu'**un joint d'étanchéité (7), en une matière susceptible de supporter les conditions d'utilisation de ce tuyau, est inséré dans l'agrafe (3).

7. Tuyau flexible selon la revendication 6, **caractérisé en ce que,** lorsqu'il est destiné à supporter des températures très élevées, le joint d'étanchéité (7) est réalisé en cuivre, amiante ou fibres minérales.

8. Tuyau flexible selon la revendication 6, **caractérisé en ce que,** lorsque les conditions de son utilisation le permettent, le joint (7) est réalisé en fibres organiques comme le coton, les aramides ou des polymères comme du caoutchouc ou du polytétrafluoréthylène ou autre.

9. Tuyau flexible selon la revendication 8, **caractérisé en ce que** le joint d'étanchéité (7) est auto-lubrifiant ou imprégné ou enduit d'un lubrifiant.

10. Tuyau flexible selon l'une quelconque des revendications 1 à 9, **caractérisé en ce qu'**il est associé à une tresse tubulaire.

11. Tuyau flexible selon la revendication 10, **caractérisé en ce que** la tresse tubulaire est située à l'intérieur du tuyau flexible.

12. Tuyau flexible selon la revendication 10, **caractérisé en ce que** la tresse tubulaire est située à l'extérieur du tuyau flexible.
